# EUROPEAN PATENT SPECIFICATION

(11) **EP 2 918 960 B1**
(45) Date of publication and mention of the grant of the patent: **08.03.2017**
(21) Application number: 15158252.5
(22) Date of filing: 09.03.2015
(51) Int. Cl.: F28F 19/02, F28F 1/32, B23P 15/26, F25B 39/02, F28F 17/00, F28D 1/047, F28D 21/00

(54) **Heat exchanger**
WÄRMETAUSCHER
ÉCHANGEUR DE CHALEUR

(30) Priority: 11.03.2014 KR 20140028482
(43) Date of publication of application: 16.09.2015
(73) Proprietor: Samsung Electronics Co., Ltd., Gyeonggi-do 16677 (KR)
(72) Inventor: Kim, Hong Suk, Seoul (KR); Kwon, Myong Jong, Gyeonggi-do (KR); Oh, Seung Jin, Seoul (KR)
(74) Representative: Walaski, Jan Filip

(56) References cited:
- JP-A- 2007 192 513
- JP-A- 2009 250 510

## Description

The following description relates to a heat exchanger according to the preamble of claim 1, and a method of
manufacturing the same, and an outdoor unit for an air conditioner having the heat exchanger, and more particularly, to a heat exchanger having an improved structure in which heat-exchanging efficiency can be improved and a method of manufacturing the same, and an outdoor unit for an air conditioner having the heat exchanger.

JP 2007 192513 A discloses such a heat exchanger.

Heat exchangers are devices that are built in and used in apparatuses that use a refrigerating cycle, such as air conditioners or refrigerators. A heat exchanger includes a plurality of heat-exchanging fins and a refrigerant pipe that is installed to guide a refrigerant and to penetrate the plurality of heat-exchanging fins. The heat-exchanging fins increase a contact area between the heat-exchanging fins and air introduced into the heat exchanger from the outside so that heat-exchanging efficiency between the refrigerant that flows through the refrigerant pipe and external air can be improved.

Generally, the narrower a distance between the heat-exchanging fins is and the wider the contact area between the heat-exchanging fins and external air is, the better an exchanging efficiency is.

However, when the heat exchanger is used as an evaporator, the surface of the evaporator is maintained at a low temperature due to circulation of a cold refrigerant, whereas introduced air has a comparatively high temperature. Thus, air introduced with humidity is in contact with the heat-exchanging fins of the evaporator maintained at the low temperature, and a dew point of air that comes into contact with the heat-exchanging fins is lowered, and thus dew is formed on the surface of the heat-exchanging fins, is accumulated, and becomes condensed water.

Also, when air introduced into the heat exchanger has high temperature and high humidity, air that contacts the fins and passes through the heat exchanger, heat-exchanges with the refrigerant and becomes air that is close to be in a saturated state, and air that passes through the fins without contacting the fins, is maintained in a comparatively high temperature and high humidity state. In this way, air having different properties is mixed so that frost may be formed in the fins. In particular, frost may occur easily in a place of the heat exchanger where the speed of wind is low and air with a large temperature difference is mixed.

In addition, condensed water formed in the fins is cooled so that ice can be formed. In addition, frosting may occur in the fins. Frosting is a phenomenon that, when humid air contacts a cooling surface maintained at a low temperature less than 0°C, a porous frost layer is formed on the cooling surface. That is, when air with high temperature and high humidity introduced into the heat exchanger contacts fins that are maintained at a low temperature due to the refrigerant, frosting may occur in the surface of the fins.

Condensed water generated in heat-exchanging fins of the evaporator in this way is formed between the heat-exchanging fins of the heat exchanger or forms a bridge between the heat-exchanging fins. Condensed water that exists between the heat-exchanging fins, frost, and ice disturb the flow of air between the heat-exchanging fins so that heat exchanging cannot be smoothly performed.

In addition, condensed water causes corrosion of metal that constitutes the heat-exchanging fins, generates an oxide of a white powder, and may cause breeding of a microorganism.

In addition, the frost layer is grown due to frosting such that a thermal resistance of the heat exchanger is increased and the flow speed of air that passes through the heat exchanger is reduced by closing a flow path.

Therefore, it is an aspect of the present disclosure to provide a heat exchanger having an improved structure in which both drainage performance and frosting-lowering performance can be satisfied, and an outdoor unit for an air conditioner having the heat exchanger.

It is an aspect of the present disclosure to provide a heat exchanger having an improved structure in which an increase in thermal resistance due to frosting can be prevented and heat-exchanging efficiency can be improved, and an outdoor unit for an air conditioner having the heat exchanger.

It is an aspect of the present disclosure to provide a heat exchanger having an improved structure in which energy consumption for defrosting can be reduced, and an outdoor unit for an air conditioner having the heat exchanger.

Additional aspects of the disclosure will be set forth in part in the description which follows and, in part, will be obvious from the description, or may be learned by practice of the disclosure.

In accordance with an aspect of the present disclosure, a heat exchanger includes: a refrigerant pipe through which a refrigerant flows; and a plurality of fins that are coupled to an outer circumferential surface of the refrigerant pipe, wherein the plurality of fins may include: a first region formed downstream in a direction in which air flows; and a second region formed upstream in the direction in which air flows, and at least one coating layer may be formed in the first region and the second region, and thicknesses of the first region and the second region may be different from each other.

A thickness of the second region may be larger than a thickness of the first region.

The at least one coating layer may include: a first coating layer; and a second coating layer having surface energy different from that of the first coating layer.

The first coating layer may be formed in the first region, and the second coating layer may be formed in the second region.

The second coating layer may be formed in the first region, and the second coating layer and the first coating layer may be formed in the second region, and the first coating layer may be stacked on the second coating layer.

The first coating layer may include at least one of a hydrophilic material and an ultra-hydrophilic material.

The at least one of the hydrophilic material and the ultra-hydrophilic material may include an organic material, and the organic material may include at least one selected from the group consisting of a carboxyl group (-COOH), an alcohol group (-OH), an amine group (-NH₂), a sulfonic acid group (-SO₃H), an ether group (-OR), and an amide group (-CONH₂).

The at least one of the hydrophilic material and the ultra-hydrophilic material may include an inorganic material, and the inorganic material may include at least one selected from the group consisting of silica, a zirconium (Zr) oxide, and a vanadium (V) oxide.

The second coating layer may include a hydrophobic material, and the hydrophobic material may include a silicon oil.

The silicon oil may include at least one selected from the group consisting of a straight silicon oil and a modified silicon oil.

The silicon oil may include at least one selected from the group consisting of polymethylhydrosiloxane (PMHS) and polydimethylsiloxane (PDMS).

The second coating layer may further include a hardening agent, and the hardening agent may include at least one selected from the group consisting of dibutyltin dilaurate (DBTDL), dibutyltin diacetate, zinc acetate, and zinc 2-ethylhexanoate.

An area of the first region and an area of the second region may be equal to each other.

The second region may have a smaller area than that of the first region. The second region may be formed at upstream edges in the direction in which air flows.

The second region may have a width that is equal to or less than approximately 20% of a total width of the plurality of fins.

In accordance with an aspect of the present disclosure, an outdoor unit for an air conditioner includes: a body; a compressor that is disposed in the body and compresses a refrigerant; and a heat exchanger that heat-exchanges the refrigerant compressed by the compressor with outdoor air, wherein the heat exchanger may include: a refrigerant pipe through which the refrigerant flows; and a plurality of fins that are coupled to an outer circumferential surface of the refrigerant pipe, and the plurality of fins may include a first coating layer and a second coating layer having different surface energy.

The first coating layer may have large surface energy and may be formed downstream in a direction in which air flows, and the second coating layer may have small surface energy and may be formed upstream in the direction in which air flows.

The first coating layer may be formed on an entire surface of the plurality of fins, and the second coating layer may be formed on the first coating layer to surround part of the first coating layer.

A thickness of the second coating layer may be larger than a thickness of the first coating layer.

The second coating layer may be formed at upstream edges in the direction in which air flows and may have a width that is equal to or less than approximately 20% of a total width of the plurality of fins.

In accordance with an aspect of the present disclosure, a method of manufacturing a heat exchanger including a refrigerant pipe through which a refrigerant flows, and a plurality of fins that are coupled to an outer circumferential surface of the refrigerant pipe and include a first region formed downstream in a direction in which air flows and a second region formed upstream in the direction in which air flows, the method includes: forming a first coating layer on the plurality of fins; and forming a second coating layer in the second region so that a thickness of the second region is larger than a thickness of the first region.

The forming of the first coating layer may include a dip coating method.

The forming of the second coating layer may include at least one selected from the group consisting of a dip coating method, a stamping coating method, and a spray process using masking.

The first coating layer may be formed on an entire surface of the plurality of fins, and the second coating layer may be formed on the first coating layer to be disposed in the second region.

The second coating layer may be coated on the first coating layer at least once.

The second coating layer may be coated on the first coating layer twice.

The second coating layer may be formed at upstream edges in the direction in which air flows and may have a width that is equal to or less than approximately 20% of a total width of the plurality of fins.

The number of times being coated of the second coating layer may be larger than the number of times being coated of the first coating layer.

These and/or other aspects of the disclosure will become apparent and more readily appreciated from the following description of the embodiments, taken in conjunction with the accompanying drawings in which:
FIG. 1 is a perspective view of a configuration of a heat exchanger according to an embodiment of the present disclosure;
FIG. 2 is a plan view illustrating a plurality of fins disposed on the heat exchanger illustrated in FIG. 1;
FIG. 3 is a cross-sectional view of the plurality of fins of FIG. 2 that are cut taken along line C-C';
FIG. 4 is a cross-sectional view illustrating a plurality of fins disposed on a heat exchanger according to an embodiment of the present disclosure;
FIG. 5 is a flowchart illustrating an operation of forming a first coating layer and a second coating layer in the heat exchanger illustrated in FIG. 1;
FIG. 6 is a flowchart illustrating an operation of forming a first coating layer and a second coating layer in the heat exchanger illustrated in FIG. 4; and
FIG. 7 is a perspective view illustrating a schematic structure of an outdoor unit for an air conditioner having the heat exchanger of FIG. 1.

Reference will now be made in detail to the embodiments of the present disclosure, examples of which are illustrated in the accompanying drawings, wherein like reference numerals refer to like elements throughout. The terms used herein, such as a "front end," a "rear end," an "upper portion," a "lower portion," a "top end," and a "bottom end," are defined based on the drawings, and the shape and position of each element are not limited by the terms.

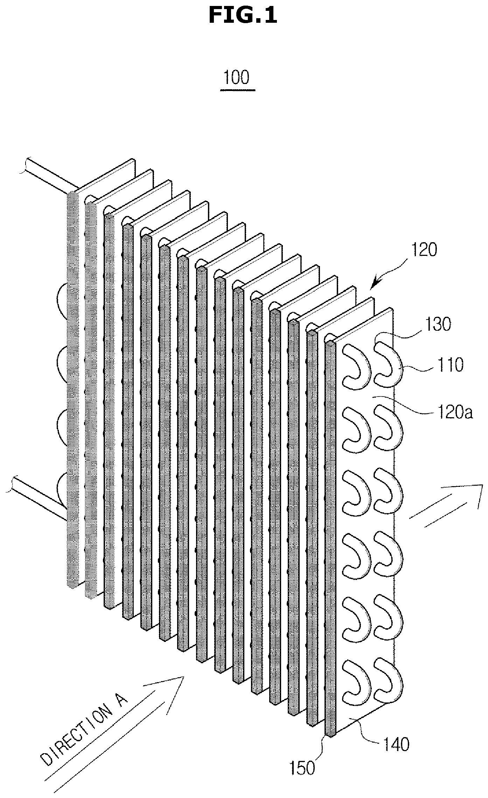

FIG. 1 is a perspective view of a configuration of a heat exchanger according to an embodiment of the present disclosure.

As illustrated in FIG. 1, a heat exchanger 100 may include a refrigerant pipe 110 through which a refrigerant flows, and a plurality of fins 120 that are coupled to an outer circumferential surface of the refrigerant pipe 110.

The refrigerant pipe 110 is provided in a shape of a hollow tube through which the refrigerant, a fluid, may flow. The refrigerant pipe 110 may be formed to be as long as possible to increase a heat-exchanging area between the refrigerant that flows through the refrigerant pipe 110 and external air. However, because there is a spatial limitation in forming the refrigerant pipe 110 to be long only in one direction, the refrigerant pipe 110 is bent in an opposite direction to a direction in which the refrigerant pipe 110 extends from both ends of the heat exchanger 100, and such bending is repeatedly performed several times so that the heat-exchanging area can be efficiently increased in a limited space.

The refrigerant heat-exchanges with external air while being phase-changed from a gaseous state to a liquid state (compressed) or from the liquid state to the gaseous state (expanded). When the refrigerant is phase-changed from the gaseous state to the liquid state, the heat exchanger 100 is used as a condenser, and when the refrigerant is phase-changed from the liquid state to the gaseous state, the heat exchanger 100 is used as an evaporator.

The refrigerant dissipates heat toward surroundings or absorbs heat from the surroundings by being compressed or expanded while flowing through the refrigerant pipe 110. When the refrigerant is compressed or expanded, the plurality of fins 120 are coupled to the refrigerant pipe 110 to efficiently dissipate or absorb heat.

The plurality of fins 120 may be stacked at regular intervals in a direction in which the refrigerant pipe 110 extends.

The plurality of fins 120 are formed of several metal materials including aluminum having high thermal conductivity and contact and are coupled to the outer circumferential surface of the refrigerant pipe 110 to substantially increase the contact area between external air and the refrigerant pipe 110.

The narrower the intervals at which the plurality of fins 120 are stacked, the more fins 120 may be disposed. However, when the intervals are excessively narrow, a resistance may be generated in air introduced into the heat exchanger 100 and a pressure loss may occur, so, as illustrated in FIG. 1, the intervals need to be properly adjusted.

A louver (not shown) that is bent to form a predetermined angle may be formed on the surface of the plurality of fins 120. The louver increases the contact area between the fins 120 and external air so that heat exchanging can be more quickly performed.

At least one coating layer 140 and 150 may be formed on the surface of the plurality of fins 120.

The at least one coating layer 140 and 150 may have different surface energy. When heterogeneous materials are put on the surface of a liquid or solid, the surface of the liquid or solid is in a high energy state compared to an inner side of the liquid or solid, and excessive energy of the surface of the liquid or solid always contracts the surface. This is referred to as surface energy. That is, the plurality of fins 120 in a solid state have surface energy and have a property in which the surface of the plurality of fins 120 is contracted and condensed water formed on the surface of the plurality of fins 120 is pulled toward the plurality of fins 120.

In general, when the plurality of fins 120 are coated with a hydrophobic material, surface energy of the plurality of fins 120 is low, and when the plurality of fins 120 are coated with a hydrophilic material, the surface energy of the plurality of fins 120 is high.

A hydrophobic property is a property in which, when the surface of a material is wet with water, semispheric water drops are formed, and a hydrophilic property is a property in which, when the surface of the material is wet with water, no semispheric water drops are formed and water drops agglomerate and are widely spread.

The hydrophobic material and the hydrophilic material may have different surface energy.

The at least one coating layer 140 and 150 is not limited to the hydrophilic material and the hydrophobic material but may include various materials having different surface energy.

The at least one coating layer 140 and 150 may have different materials.

The at least one coating layer 140 and 150 may have different thicknesses. The thicknesses of the at least one coating layer 140 and 150 may be adjusted with a viscosity of a coating solution. The thicknesses of the at least one coating layer 140 and 150 may be adjusted in units of atto (A) or micrometer (*µ*m).

The at least one coating layer 140 and 150 may include a first coating layer 140 and a second coating layer 150.

The first coating layer 140 may be formed downstream in a direction A in which air flows, so that drainage of the condensed water formed on the plurality of fins 120 can be smoothly performed. The second coating layer 150 may be formed upstream in the direction A in which air flows, so that the condensed water can be prevented from being frosted on the plurality of fins 120.

Materials of the refrigerant pipe 110 and the plurality of fins 120 that constitute the heat exchanger 100 may be aluminum or copper, for example.

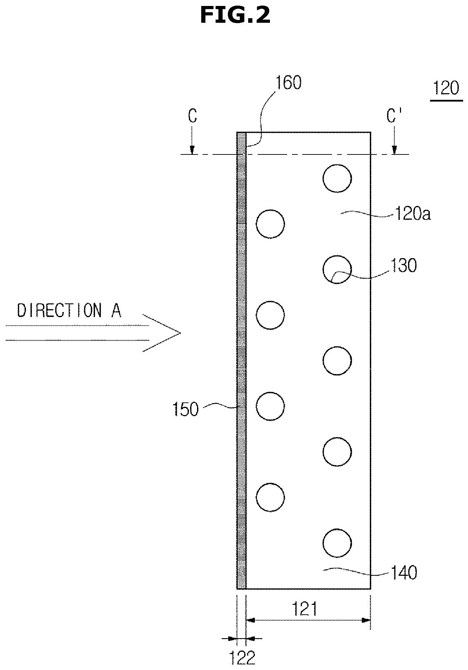

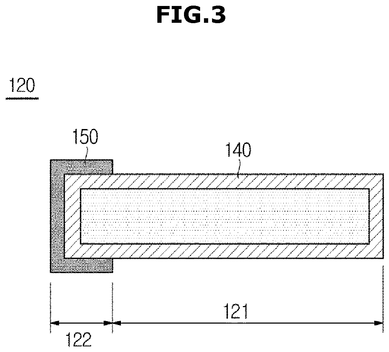

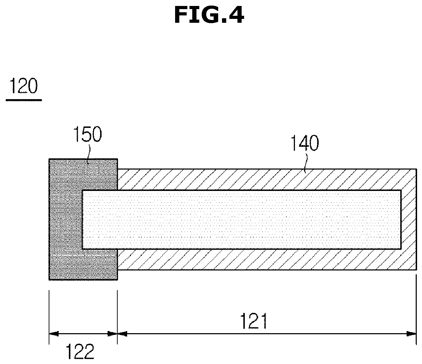

FIG. 2 is a plan view illustrating a plurality of fins disposed on the heat exchanger illustrated in FIG. 1, FIG. 3 is a cross-sectional view of the plurality of fins of FIG. 2 that are cut taken along line C-C', and FIG. 4 is a cross-sectional view illustrating a plurality of fins disposed on a heat exchanger according to an embodiment of the present disclosure. Redundant descriptions with FIG. 1 will be omitted.

As illustrated in FIGS. 2 through 4, the plurality of fins 120 may include a first region 121 and a second region 122.

The first region 121 may be formed downstream in the direction A in which air flows. The second region 122 may form a boundary with the first region 121 and may be formed upstream in the direction A in which air flows. Thus, air introduced into the heat exchanger 100 is discharged to an outside of the heat exchanger 100 by sequentially passing through the second region 122 and the first region 121.

A plurality of through holes 130 through which the refrigerant pipe 110 penetrates the plurality of fins 120 in a zigzag manner, may be formed in the plurality of fins 120.

An area of the first region 121 and an area of the second region 122 may be equal to each other.

The area of the first region 121 and the area of the second region 122 may be different from each other. The second region 122 may have a smaller area than that of the first region 121.

The second region 122 may be formed at upstream edges in the direction A in which air flows. In detail, the second region 122 may be formed in a lengthwise direction of the plurality of fins 120 at upstream edges in the direction A in which air flows.

The second region 122 may have a width that is equal to or less than approximately 50% of a total width of the plurality of fins 120. The second region 122 may have a width that is equal to or less than approximately 20% of the total width of the plurality of fins 120. That is, when a width of one surface 120a of the plurality of fins 120 in which the plurality of through holes 130 are formed is 100%, the second region 122 may have a width that is equal to or less than approximately 20% of the total width of the plurality of fins 120. When the second region 122 is formed at upstream edges in the direction A in which air flows, a boundary 160 between the first region 121 and the second region 122 may be formed at a point in which the width of the second region 122 is equal to or less than approximately 20% of the total width of the plurality of fins 120 in the direction A in which air flows.

Thicknesses of the first region 121 and the second region 122 may be different from each other. The thickness of the second region 122 may be larger than that of the first region 121.

The first coating layer 140 may include at least one of a hydrophilic material and an ultra-hydrophilic material so that drainage of the condensed water formed on the plurality of fins 120 can be smoothly performed.

The at least one of the hydrophilic material and the ultra-hydrophilic material that constitute the first coating layer 140 may include an organic material. The organic material may include at least one selected from the group consisting of a carboxyl group (-COOH), an alcohol group (-OH), an amine group (-NH₂), a sulfonic acid group (-SO₃H), an ether group (-OR), and an amide group (-CONH₂), for example. The carboxyl group (-COOH), the amine group (-NH₂), and the sulfonic acid group (-SO₃H) correspond to ionic functional groups, and the alcohol group (-OH), the ether group (-OR), and the amide group (-CONH₂) correspond to non-ionic functional groups.

The at least one of the hydrophilic material and the ultra-hydrophilic material that constitute the first coating layer 140 may further include an inorganic material. The inorganic material may include at least one selected from the group consisting of silica, a zirconium (Zr) oxide, and a vanadium (V) oxide, for example.

The first coating layer 140 may be formed on the entire surface or a partial surface of the plurality of fins 120.

The second coating layer 150 may include a silicon oil so that the condensed water can be prevented from being frosted on the plurality of fins 120.

The silicon oil has an excellent hydrophobic property.

The silicon oil may include at least one of a straight silicon oil and a modified silicon oil. Siloxane is used as a backbone for the straight silicon oil and the modified silicon oil, and the straight silicon oil and the modified silicon oil may be largely classified according to a type of organic substituents coupled to a silicon (Si) atom.

The silicon oil may include at least one selected from the group consisting of polymethylhydrosiloxane (PMHS) and polydimethylsiloxane (PDMS), for example.

The second coating layer 150 may further include a hardening agent.

The hardening agent serves as a catalyst that accelerates hardening and may include at least one selected from the group consisting of dibutyltin dilaurate (DBTDL), dibutyltin diacetate, zinc acetate, and zinc 2-ethylhexanoate, for example.

When the second coating layer 150 includes the silicon oil and the hardening agent, the content of the silicon oil may be approximately 90% or more, for example, 99% or more.

The second coating layer 150 may be formed on the entire surface or a partial surface of the plurality of fins 120.

The second coating layer 150 may also be formed on a partial surface of the first coating layer 140.

The second coating layer 150 may be formed at upstream edges in the direction A in which air flows and may have a width that is equal to or less than approximately 20% of the total width of the plurality of fins 120.

The first coating layer 140 and the second coating layer 150 may constitute a step height therebetween.

The first coating layer 140 and the second coating layer 150 may have different thicknesses. In detail, the second coating layer 150 may have a larger thickness than that of the first coating layer 140.

The first coating layer 140 may be formed on the entire surface of the plurality of fins 120, and the second coating layer 150 may be formed on the first coating layer 140 to surround part of the first coating layer 140 that corresponds to an upstream side in the direction A in which air flows.

At least one of the first coating layer 140 and the second coating layer 150 may be formed in the first region 121 and the second region 122 of the plurality of fins 120.

The thickness of the first region 121 and the thickness of the second region 122 including at least one of the first coating layer 140 and the second coating layer 150 may be different from each other. The thickness of the second region 122 including at least one of the first coating layer 140 and the second coating layer 150 may be larger than the thickness of the first region 121 including at least one of the first coating layer 140 and the second coating layer 150.

The first coating layer 140 may be formed in the first region 121, and the second coating layer 150 may be formed in the second region 122.

When the second coating layer 150 is formed in the second region 122, the condensed water that is generated when a heat-exchanging operation of high-temperature air introduced into the second region 122 and the refrigerant that flows through the refrigerant pipe 110 is performed, can be prevented from being formed in the second region 122. When the first coating layer 140 is formed in the first region 121, the condensed water that is generated when the heat-exchanging operation of high-temperature air that passes through the second region 122 and the refrigerant that flows through the refrigerant pipe 110 is performed and that is formed in the first region 121, can be smoothly drained.

Even when the condensed water is formed in the second region 122 in which the second coating layer 150 is formed, the condensed water formed in the second region 122 is transmitted to the first region 121 together with air introduced into the second region 122. Thereafter, the condensed water may be mixed with the condensed water formed in the first region 121 in the first region 121 in which the first coating layer 140 is formed, and may be drained in a downward direction of the plurality of fins 120 due to gravity.

The first coating layer 140 may be formed in the first region 121, and the first coating layer 140 and the second coating layer 150 may be formed in the second region 122. In this case, the second coating layer 150 may be stacked on the first coating layer 140. That is, the first coating layer 140 and the second coating layer 150 may be sequentially stacked in the second region 122 so that the second coating layer 150 can be exposed to the outside.

The second coating layer 150 may be formed in the first region 121, and the second coating layer 150 and the first coating layer 140 may be formed in the second region 122. In this case, the first coating layer 140 may be stacked on the second coating layer 150. That is, the second coating layer 150 and the first coating layer 140 may be sequentially stacked in the second region 122 so that the first coating layer 140 can be exposed to the outside.

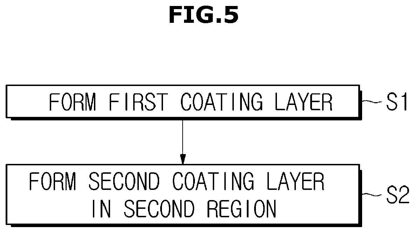

FIG. 5 is a flowchart illustrating an operation of forming a first coating layer and a second coating layer in the heat exchanger illustrated in FIG. 1.

As illustrated in FIG. 5, a method of manufacturing the heat exchanger 100 may include forming the first coating layer 140 on the plurality of fins 120 (operation S₁) and forming the second coating layer 150 in the second region 122 (operation S₂) so that the thickness of the second region 122 is larger than the thickness of the first region 121.

The first coating layer 140 may be formed in the first region 121, and the second coating layer 150 may be formed in the second region 122.

Alternatively, one of the first coating layer 140 and the second coating layer 150 may be formed on the entire surface of the plurality of fins 120, and the other one of the first coating layer 140 and the second coating layer 150 may be formed on the surface of one of the first coating layer 140 and the second coating layer 150 that have been already formed. In detail, when the first coating layer 140 is first formed on the entire surface of the plurality of fins 120, the second coating layer 150 may be formed on the surface of the first coating layer 140 to surround part of the first coating layer 140. When the second coating layer 150 is first formed on the entire surface of the plurality of fins 120, the first coating layer 140 may be formed on the surface of the second coating layer 150 to surround part of the second coating layer 150. The first coating layer 140 may be first formed on the entire surface of the plurality of fins 120, and the second coating layer 150 may be formed on the surface of the first coating layer 140 that corresponds to the second region 122.

Forming the first coating layer 140 may include a dip coating method.

Forming the second coating layer 150 may include at least one selected from the group consisting of a dip coating method, a stamping coating method, and a spray process using masking, for example.

The first coating layer 140 may be coated on the surface of the plurality of fins 120 at least once or more. The second coating layer 150 may be coated on the surface of the plurality of fins 120 at least once or more. The second coating layer 150 may be coated on the surface of the first coating layer 140 at least once or more. The second coating layer 150 may be coated on the surface of the first coating layer 140 twice.

The number of times being coated of the first coating layer 140 and the number of times being coated of the second coating layer 150 may be different from each other. In detail, the number of times being coated of the second coating layer 150 may be larger than that of the first coating layer 140.

The relationship between the number of times being coated of the second coating layer 150 and a frosting-lowering effect will be described as below.

Based on a case where the second coating layer 150 was coated once, a frosting time when the second coating layer 150 was coated twice was increased by 108.1%, and a frosting time when the second coating layer 150 was coated three times was increased by 98.3%. That is, because the frosting time when the second coating layer 150 was coated twice, was the largest, the frosting-lowering effect is best. However, the frosting time when the second coating layer 150 was coated three times, was relatively shorter than other frosting times so that the frosting-lowering effect is reduced. The frosting time refers to a time required until frosting occurs in the plurality of fins 120.

As the number of times being coated of the second coating layer 150 is increased, viscosity of the coating solution is increased due to the effect of the hardening agent so that the thickness of the second coating layer 150 can be gradually increased and thus a space between the plurality of fins 120 is blocked and the frosting-lowering effect can be reduced.

A process of cleaning the plurality of fins 120 can be selectively performed before the first coating layer 140 is formed on the plurality of fins 120.

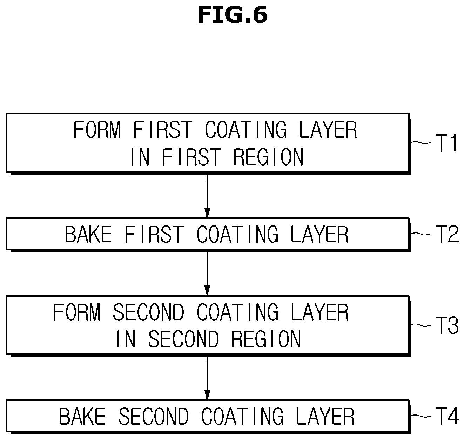

FIG. 6 is a flowchart illustrating an operation of forming a first coating layer and a second coating layer in the heat exchanger illustrated in FIG. 4. Redundant descriptions with FIG. 5 will be omitted.

As illustrated in FIG. 6, a method of manufacturing the heat exchanger 100 may include forming the first coating layer 140 in the first region 121 (operation T1), baking the first coating layer 140 formed in the first region 121 (operation T2), forming the second coating layer 150 in the second region 122 (operation T3), and baking the second coating layer 150 formed in the second region 122 (operation T4).

The first coating layer 140 may be baked at a temperature of 150°C for 20 minutes. The second coating layer 150 may be baked at a temperature of 150°C for 10 minutes when the content of the hardening agent is 0.5 wt% and may be baked at a temperature of 170°C for 5 minutes when the content of the hardening agent is 1.0 wt%.

Drainage effect of the condensed water and frosting-lowering effect according to a coating condition will be described as below.

Embodiment 1 is a case where the plurality of fins 120 are coated only with the first coating layer 140. In Embodiment 1, the first coating layer 140 is coated once.

Embodiment 2 is a case where the plurality of fins 120 are coated with the first coating layer 140 and the second coating layer 150. In Embodiment 2, the hardening agent has the content of 0.5% based on the content of the second coating layer 150, and the plurality of fins 120 are baked at a temperature of 150°C for 10 minutes. In this case, the first coating layer 140 is coated once, and the second coating layer 150 is coated twice.

Embodiment 3 is a case where the plurality of fins 120 are coated with the first coating layer 140 and the second coating layer 150. In Embodiment 3, the hardening agent has the content of 1.0% based on the content of the second coating layer 150, and the plurality of fins 120 are baked at a temperature of 170°C for 5 minutes. In this case, the first coating layer 140 is coated once, and the second coating layer 150 is coated twice.

In Embodiments 1, 2, and 3, a hydrophilic material is used for the first coating layer 140, and a silicon oil is used for the second coating layer 150.

The frosting time is a criterion for showing the frosting-lowering effect according to a coating condition, and as the frosting time is increased, the frosting-lowering effect is improved.

A maximum differential pressure is a criterion for showing the drainage effect according to a coating condition, and as the maximum differential pressure is decreased, the drainage effect is improved.

Based on Embodiment 1, the frosting time in Embodiment 2 was increased by 86%, and the frosting time in Embodiment 3 was increased by 162%. Also, a maximum differential pressure (mmAq) in Embodiment 1 is 0.14, and a maximum differential pressure (mmAq) in Embodiment 2 is 0.13. A maximum differential pressure (mmAq) in Embodiment 3 is 0.11.

Thus, in Embodiments 2 and 3 in which both the first coating layer 140 and the second coating layer 150 are coated, better frosting-lowering effect and drainage effect can be shown when compared to Embodiment 1 in which only the first coating layer 140 is coated.

Also, the frosting time in Embodiment 3 is longer than the frosting time in Embodiment 2 and the maximum differential pressure in Embodiment 3 is smaller than the maximum differential pressure in Embodiment 2. Thus, better frosting-lowering effect and drainage effect can be shown on the coating condition of Embodiment 3.

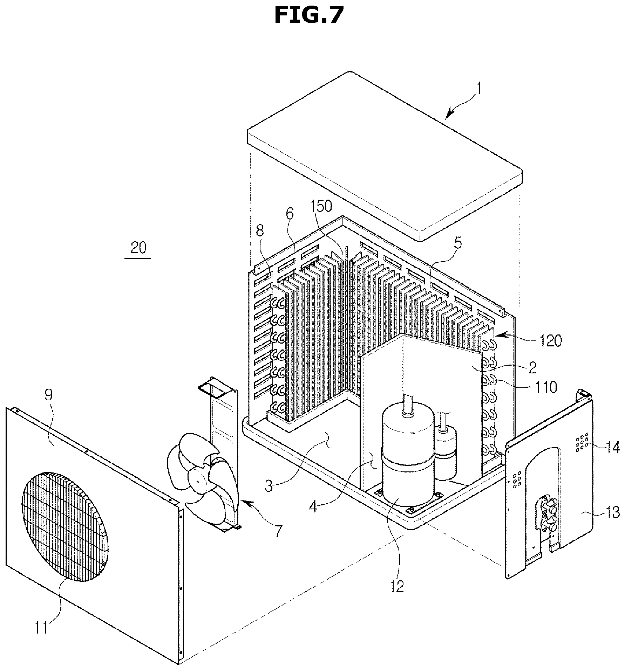

FIG. 7 is a perspective view illustrating a schematic structure of an outdoor unit for an air conditioner having the heat exchanger of FIG. 1.

Air conditioners may be classified into a separation type air conditioner and an integral air conditioner. Among them, the separation type air conditioner includes an indoor unit that is installed indoors, intakes indoor air, heat-exchanges the inhaled air with a refrigerant, and exhausts the heat-exchanged air indoors again, and an outdoor unit that heat-exchanges the refrigerant introduced from the indoor unit with external air to be heat-exchanged with indoor air again and that supplies the refrigerant to the indoor unit.

As illustrated in FIG. 7, an outdoor unit 20 for an air conditioner may include a body 1 that constitutes an exterior, and a partition 2 that partitions off an internal space of the body 1.

The internal space of the body 1 is partitioned off by the partition 2 into a heat-exchanging chamber 3 and a compression chamber 4. A heat exchanger 100 that is bent along inner sides of a rear side 5 and a left side 6 of the body 1, and a blower unit 7 through which external air is introduced or exhausted so that heat-exchanging can be easily performed by the heat exchanger 100, are provided in the heat-exchanging chamber 3. An intake portion 8 is formed at the rear side 5 and the left side 6 of the body 1 to intake external air, and an exhaust portion 11 for exhausting heat-exchanged air is formed at a front side 9 of the body 1.

A compressor 12 for compressing the refrigerant introduced from an indoor unit (not shown) is installed in the compression chamber 4 of the body 1. A plurality of openings 14, through which the compression chamber 4 and the outside are connected to each other, may be formed in a right side 13 of the body 1.

The heat exchanger 100 may include a refrigerant pipe 110 through which the refrigerant flows, and a plurality of fins 120 that are coupled to an outer circumferential surface of the refrigerant pipe 110, as illustrated in FIG. 1.

The plurality of fins 120 may include a first region 121 formed downstream in a direction A in which air flows, and a second region 122 that forms a boundary with the first region 121 and is formed upstream in the direction A in which air flows.

At least one of a first coating layer 140 and a second coating layer 150 having different surface energy, so that drainage of the condensed water can be smoothly performed and frosting of the condensed water can be prevented, may be formed in the first region 121 and the second region 122. At least one of the first coating layer 140 and the second coating layer 150 may be formed in the first region 121 and the second region 122 so that the second coating layer 150 can be exposed to the outside in the second region 122.

The heat exchanger 100 may be used in a refrigerator, for example, as well as in the air conditioner.

As described above, a first coating layer and a second coating layer that form a step height on a plurality of fins, are introduced so that drainage performance of condensed water and frosting-lowering performance can be simultaneously satisfied.

The first coating layer and the second coating layer having different surface energy are introduced onto the plurality of fins so that formation of frost or ice can be prevented and heat-exchanging efficiency can be improved.

The first coating layer and the second coating layer having different thicknesses are introduced onto the plurality of fins so that condensed water can be smoothly discharged and frosting and breeding of a microorganism due to the condensed water can be prevented.

Although a few embodiments of the present invention have been shown and described, it would be appreciated by those skilled in the art that changes may be made in these embodiments without departing from the principles of the invention, the scope of which is defined in the claims.

## Claims

1. A heat exchanger (100) comprising:
a refrigerant pipe (110); and
a plurality of fins (120) that are coupled to an outer circumferential surface of the refrigerant pipe,
wherein each fin of the plurality of fins comprises:
a first region (121) formed downstream in a direction in which air flows, and
a second region (122) formed upstream in the direction in which air flows, and
at least one coating layer (140, 150) is formed in each of the first region
and the second region, **characterized in that** thicknesses of the coating layer in the first region (140) and the coating
layer in the second region (150) are different from each other.

2. The heat exchanger of claim 1, wherein a thickness of the coating layer in the second region is larger than a thickness of the coating layer in the first region.

3. The heat exchanger of claim 1 or 2, wherein the at least one coating layer comprises:
a first coating layer; and
a second coating layer having a surface energy different from that of the first coating layer.

4. The heat exchanger of claim 3, wherein the first coating layer is formed in the first region, and the second coating layer is formed in the second region.

5. The heat exchanger of claim 3, wherein the first coating layer is formed in the first region, and the first coating layer and the second coating layer are formed in the second region, and
the second coating layer is stacked on the first coating layer.

6. The heat exchanger of claim 3, 4 or 5, wherein the first coating layer comprises at least one of a hydrophilic material and an ultra-hydrophilic material.

7. The heat exchanger of claim 6, wherein the at least one of the hydrophilic material and the ultra-hydrophilic material comprises an organic material, and
the organic material comprises at least one selected from the group consisting of a carboxyl group (-COOH), an alcohol group (-OH), an amine group (-NH₂), a sulfonic acid group (-SO₃H), an ether group (-OR), and an amide group (-CONH₂).

8. The heat exchanger of claim 6, wherein the at least one of the hydrophilic material and the ultra-hydrophilic material comprises an inorganic material, and
the inorganic material comprises at least one selected from the group consisting of silica, a zirconium (Zr) oxide, and a vanadium (V) oxide.

9. The heat exchanger of any one of claims 3 to 8, wherein the second coating layer comprises a hydrophobic material, and
the hydrophobic material comprises a silicon oil.

10. The heat exchanger of claim 9, wherein the silicon oil comprises at least one selected from the group consisting of a straight silicon oil and a modified silicon oil.

11. The heat exchanger of claim 10, wherein the silicon oil comprises at least one selected from the group consisting of polymethylhydrosiloxane (PMHS) and polydimethylsiloxane (PDMS).

12. The heat exchanger of any one of claims 9 to 11, wherein the second coating layer further comprises a hardening agent, and
the hardening agent comprises at least one selected from the group consisting of dibutyltin dilaurate (DBTDL), dibutyltin diacetate, zinc acetate, and zinc 2-ethylhexanoate.

13. The heat exchanger of any one of the preceding claims, wherein an area of the first region and an area of the second region are equal to each other.

14. The heat exchanger of any one of claims 1 to 12, wherein the second region has a smaller area than that of the first region.

## Patentansprüche

1. Wärmetauscher (100), der Folgendes umfasst:
ein Kältemittelrohr (110); und
eine Vielzahl von Rippen (120), die mit einer äußeren Umfangsoberfläche des Kältemittelrohres gekoppelt sind,
wobei jede Rippe der Vielzahl von Rippen Folgendes umfasst:
einen ersten Bereich (121), der stromabwärts in einer Richtung gebildet ist, in der Luft strömt, und
einen zweiten Bereich (122), der stromaufwärts in der Richtung gebildet ist, in der Luft strömt, und
wobei mindestens eine Beschichtungsschicht (140, 150) in dem ersten Bereich und dem zweiten Bereich gebildet ist, **dadurch gekennzeichnet, dass** die Dicke der Beschichtungsschicht in dem ersten Bereich (140) und die Dicke der Beschichtungsschicht in dem zweiten Bereich (150) voneinander verschieden sind.

2. Wärmetauscher nach Anspruch 1, wobei eine Dicke der Beschichtungsschicht in dem zweiten Bereich größer ist als eine Dicke der Beschichtungsschicht in dem ersten Bereich.

3. Wärmetauscher nach Anspruch 1 oder 2, wobei die mindestens eine Beschichtungsschicht Folgendes umfasst:
eine erste Beschichtungsschicht und
eine zweite Beschichtungsschicht, die eine Oberflächenenergie aufweist, die sich von der der ersten Beschichtungsschicht unterscheidet.

4. Wärmetauscher nach Anspruch 3, wobei die erste Beschichtungsschicht in dem ersten Bereich gebildet ist und
die zweite Beschichtungsschicht in dem zweiten Bereich gebildet ist.

5. Wärmetauscher nach Anspruch 3, wobei die erste Beschichtungsschicht in dem ersten Bereich gebildet ist und
die erste Beschichtungsschicht und die zweite Beschichtungsschicht in dem zweiten Bereich gebildet sind und
die zweite Beschichtungsschicht auf der ersten Beschichtungsschicht angeordnet ist.

6. Wärmetauscher nach Anspruch 3, 4 oder 5, wobei die erste Beschichtungsschicht mindestens ein hydrophiles Material oder ein ultra-hydrophiles Material umfasst.

7. Wärmetauscher nach Anspruch 6, wobei das mindestens eine hydrophile Material oder das ultra-hydrophile Material ein organisches Material umfasst und
das organische Material mindestens ein Material umfasst, das aus der Gruppe ausgewählt wird, die aus Folgendem besteht: einer Carboxylgruppe (-COOH), einer Alkoholgruppe (-OH), einer Amingruppe (-NH₂), einer Sulfonsäuregruppe (-SO₃H), einer Ethergruppe (-OR) und einer Amidgruppe (-CONH₂).

8. Wärmetauscher nach Anspruch 6, wobei das mindestens eine hydrophile Material oder das ultra-hydrophile Material ein anorganisches Material umfasst und
das anorganische Material mindestens ein Material umfasst, das aus der Gruppe ausgewählt wird, die aus Folgendem besteht: Siliciumdioxid, einem Zirkoniumoxid (Zr) und einem Vanadiumoxid (V).

9. Wärmetauscher nach einem der Ansprüche 3 bis 8, wobei die zweite Beschichtungsschicht ein hydrophobes Material umfasst und
das hydrophobe Material ein Silikonöl umfasst.

10. Wärmetauscher nach Anspruch 9, wobei das Silikonöl mindestens eines umfasst, das aus der Gruppe ausgewählt wird, die aus einem geraden Silikonöl und einem modifizierten Silikonöl besteht.

11. Wärmetauscher nach Anspruch 10, wobei das Silikonöl mindestens eines umfasst, das aus der Gruppe ausgewählt wird, die aus Polymethylhydrosiloxan (PMHS) und Polydimethylsiloxan (PDMS) besteht.

12. Wärmetauscher nach einem der Ansprüche 9 bis 11, wobei die zweite Beschichtungsschicht ferner ein Härtungsmittel umfasst und
das Härtungsmittel mindestens eines umfasst, das aus der Gruppe ausgewählt wird, die aus Folgendem besteht:
Dibutylzinndilaurat (DBTDL), Dibutylzinndiacetat, Zinkacetat und Zink-2-ethylhexanoat.

13. Wärmetauscher nach einem der vorhergehenden Ansprüche, wobei eine Fläche des ersten Bereichs und eine Fläche des zweiten Bereichs einander gleich sind.

14. Wärmetauscher nach einem der Ansprüche 1 bis 12, wobei der zweite Bereich eine kleinere Fläche als der erste Bereich aufweist.

## Revendications

1. Échangeur de chaleur (100) comprenant :
une conduite de réfrigérant (110) ; et
une pluralité d'ailettes (120) qui sont couplées à une surface circonférentielle extérieure de la conduite de réfrigérant, chaque ailette de la pluralité d'ailettes comprenant :
une première région (121) formée en aval dans une direction d'écoulement de l'air, et
une deuxième région (122) formée en amont dans la direction d'écoulement de l'air, et
au moins une couche de revêtement (140, 150) est formée dans chacune de la première région et de la deuxième région, **caractérisé en ce que** les épaisseurs de la couche de revêtement dans la première région (140) et de la couche de revêtement dans la deuxième région (150) sont différentes l'une de l'autre.

2. Échangeur de chaleur selon la revendication 1, dans lequel une épaisseur de la couche de revêtement dans la deuxième région est supérieure à une épaisseur de la couche de revêtement dans la première région.

3. Échangeur de chaleur selon la revendication 1 ou la revendication 2, dans lequel ladite au moins une couche de revêtement comprend :
une première couche de revêtement ; et
une deuxième couche de revêtement ayant une énergie de surface différente de celle de la première couche de revêtement.

4. Échangeur de chaleur selon la revendication 3, dans lequel la première couche de revêtement est formée dans la première région, et
la deuxième couche de revêtement est formée dans la deuxième région.

5. Échangeur de chaleur selon la revendication 3, dans lequel la première couche de revêtement est formée dans la première région, et
la première couche de revêtement et la deuxième couche de revêtement sont formées dans la deuxième région, et
la deuxième couche de revêtement est superposée sur la première couche de revêtement.

6. Échangeur de chaleur selon la revendication 3, la revendication 4 ou la revendication 5, dans lequel la première couche de revêtement comprend l'un au moins parmi un matériau hydrophile et un matériau ultra-hydrophile.

7. Échangeur de chaleur selon la revendication 6, dans lequel ledit au moins un matériau parmi le matériau hydrophile et le matériau ultra-hydrophile comprend un matériau organique, et
le matériau organique comprend au moins un matériau choisi dans le groupe constitué par un groupe carboxyle (-COOH), un groupe alcool (-OH), un groupe amine (-NH₂), un groupe acide sulfonique (-SO₃H), un groupe éther (-OR), et un groupe amide (-CONH₂).

8. Échangeur de chaleur selon la revendication 6, dans lequel ledit au moins un matériau parmi le matériau hydrophile et le matériau ultra-hydrophile comprend un matériau inorganique, et
le matériau inorganique comprend au moins un matériau choisi dans le groupe constitué par la silice, un oxyde de zirconium (Zr) et un oxyde de vanadium (V).

9. Échangeur de chaleur selon l'une quelconque des revendications 3 à 8, dans lequel la deuxième couche de revêtement comprend un matériau hydrophobe, et
le matériau hydrophobe comprend une huile de silicone.

10. Échangeur de chaleur selon la revendication 9, dans lequel l'huile de silicone comprend au moins une huile choisie dans le groupe constitué par une huile de silicone de distillation directe et une huile de silicone modifiée.

11. Échangeur de chaleur selon la revendication 10, dans lequel l'huile de silicone comprend au moins une huile choisie dans le groupe constitué par le polyméthylhydrosiloxane (PMHS) et le polydiméthylsiloxane (PDMS).

12. Échangeur de chaleur selon l'une quelconque des revendications 9 à 11, dans lequel la deuxième couche de revêtement comprend en outre un agent durcisseur, et
l'agent durcisseur comprend au moins un agent choisi dans le groupe constitué par le dilaurate de dibutylétain (DBTDL), le diacétate de dibutylétain, l'acétate de zinc et le 2-éthylhexanoate de zinc.

13. Échangeur de chaleur selon l'une quelconque des revendications précédentes, dans lequel une aire de surface de la première région et une aire de surface de la deuxième région sont égales l'une à l'autre.

14. Échangeur de chaleur selon l'une quelconque des revendications 1 à 12, dans lequel l'aire de surface de la deuxième région est plus petite que celle de la première région.
